# EUROPEAN PATENT SPECIFICATION

(11) **EP 1 535 809 B1**
(45) Date of publication and mention of the grant of the patent: **03.05.2006**
(21) Application number: 04027860.8
(22) Date of filing: 24.11.2004
(51) Int. Cl.: B60R 21/16, B60R 21/20

(54) **Head-protecting airbag**
Kopfschutzgassack
Coussin gonflable de protection de la tête

(30) Priority: 25.11.2003 JP 2003394210; 28.11.2003 JP 2003399400; 05.03.2004 JP 2004062632; 11.03.2004 JP 2004069366
(43) Date of publication of application: 01.06.2005
(73) Proprietor: TOYODA GOSEI CO., LTD., Nishikasugai-gun, Aichi-ken, 452-8564 (JP)
(72) Inventor: Kino, Masao, Toyoda Gosei Co., Ltd., Nishikasugai-gun Aichi-ken, 452-8564 (JP); Yamamoto, Tadashi, Toyoda Gosei Co., Ltd., Nishikasugai-gun Aichi-ken, 452-8564 (JP); Ikeda, Takanobu, Toyoda Gosei Co., Ltd., Nishikasugai-gun Aichi-ken, 452-8564 (JP)
(74) Representative: TBK-Patent

(56) References cited:
- EP-A- 0 773 140
- US-A1- 2002 096 863
- US-A1- 2002 167 153
- US-B1- 6 450 529
- US-B1- 6 632 753

## Description

### BACKGROUND OF THE INVENTION

### 1. FIELD OF THE INVENTION

The present invention relates to a head- protecting airbag which is folded and housed in upper edge of windows, and is deployable to cover interior side of windows upon inflow of inflation gas as defined in the preamble of claim 1 and known for instance from US-6 632 753 B1 or US-2002/0 167 153 A1 or US-6 450 529 B1.

### 2. DESCRIPTION OF RELATED ART

Japanese Patent Laid-Open No. 2001-233156 discloses a head-protecting airbag which is made by hollow-weaving method from polyamide, polyester yarns or the like. Outer surface of the airbag is coated with coating agent such as silicone for keeping internal pressure of the airbag completely inflated.

However, since this conventional airbag is coated with coating agent all over its outer surface to enhance air-tightness, it is difficult to suppress a rise of internal pressure when the completely inflated airbag engage an occupant's head. Therefore, the conventional head-protecting airbag has a room for improvement in suppressing a rise of internal pressure, and increasing energy absorption to assure protection of occupants' heads.

### SUMMARY OF THE INVENTION

An object of the present invention is to provide a head-protecting airbag capable of suppressing a rise of internal pressure, and having improved energy absorbing property to assure protection of occupants' heads.

The object of the present invention is achieved by a head-protecting airbag having following constructions as defined in claim 1.

In the airbag of the present invention, accordingly, if an occupant's head impacts on the protection portion of the completely inflated airbag, inflation gas leaks from either the inner wall or outer wall made of uncoated fabric, which helps suppress a rise of internal pressure of the protection portion. In comparison with a conventional head-protecting airbag coated by coating agent such as silicone substantially all over outer surface, consequently, the airbag of the present invention contributes to suppress the rise of internal pressure upon engagement of occupant's head. Moreover, in the airbag of the present invention, since inflation gas leaks uniformly from a substantially entire area of either the inner wall or the outer wall made of uncoated fabric, it is prevented that the internal pressure of the completely inflated airbag rises partially, so that energy generated upon engagement of occupant's head is uniformly absorbed.

Therefore, the head-protecting airbag according to the present invention suppresses a rise of internal pressure, and has improved energy absorbing property for assuring protection of occupants' heads.

The remaining wall out of the inner wall and outer wall is desirably made of coated fabric that has a coating layer for preventing gas leakage thereon.

When the inner wall is made of coated fabric which has a coating layer on outer surface, the coating layer helps increase coefficient of friction of surface of the inner wall in comparison with a case employing uncoated fabric for the inner wall. Consequently, the occupant's head becomes unslippery against the inner wall, and therefore, restraint performance is improved. Contrarily, when the outer wall is made of coated fabric which has a coating layer on outer surface, even if a window pane located outward of the outer wall is broken, the outer wall protected by the coating layer is not easily damaged. In addition, since the inner wall is made of uncoated fabric, coefficient of friction of a surface of the inner wall is lower than a case having a coating layer, so that the airbag smoothly deploys in a gap between the occupant's head and window, even if the gap is narrow. Accordingly, the airbag is desirably employed in a compact car which is limited in space.

According to the invention, the air permeability H of the uncoated fabric is in a range of 5.0cm³/cm²·s ≤ H ≤ 25.0cm³/cm²·s. Furthermore, it is desired that thickness t of the protection portion at complete inflation of the airbag is predetermined in a range of 100mm ≤ t ≤ 280mm.

In the above airbag, moreover, it is desired that yarn density of the coated fabric is smaller than yarn density of the uncoated fabric.

An airbag with this arrangement is lighter in weight than an airbag having the same yarn density in both the inner wall and outer wall, for a difference of the yarn density between the outer wall and inner wall. Moreover, since a wall made of coated fabric is thinner than a wall made of uncoated fabric, the airbag having this arrangement is folded into a compacter shape compared to an airbag having the same yarn density for both the inner wall and outer wall.

It is also appreciated that both of the inner wall and outer wall are made of uncoated fabric whose air permeability H is in a range of 5.0cm³/cm²·s ≤ H ≤ 25.0cm³/cm²·s.

With this arrangement, too, when an occupant's head impacts on the protection portion of the completely inflated airbag, inflation gas leaks uniformly from an entire area of the inner wall and outer wall of the protection portion, which contributes to suppress a rise of internal pressure of the protection portion. Accordingly, the completely inflated airbag properly protects an occupant's head by high energy absorbing property of the protection portion.

### BRIEF DESCRIPTION OF DRAWINGS

Fig. 1 is a front view of a head-protecting airbag device employing a first embodiment of an airbag according to the present invention, as viewed from vehicle's interior;
Fig. 2 is a front view of an airbag of the first embodiment flatly developed;
Fig. 3 is an enlarged section taken along line III-III of Fig. 2;
Fig. 4 is a schematic enlarged section taken along line IV-IV of Fig. 1;
Fig. 5 shows a graph of results from impacter tests conducted on airbags of the first embodiment;
Fig. 6 is a schematic section of a modification of the airbag of the first embodiment;
Fig. 7 is a schematic section of another modification of the airbag of the first embodiment;
Fig. 8 is a front view of an airbag of the second embodiment flatly developed;
Fig. 9 is an enlarged section taken along line IX-IX of Fig. 8; and
Fig. 10 shows a graph of results from impacter tests conducted on airbags of the second embodiment.

### DESCRIPTION OF PREFERRED EMBODIMENTS

Preferred embodiments of the present invention are described below with reference to the accompanying drawings. However, the invention is not limited to the embodiments disclosed herein. All modifications within the appended claims are intended to be encompassed in the scope of the claims.

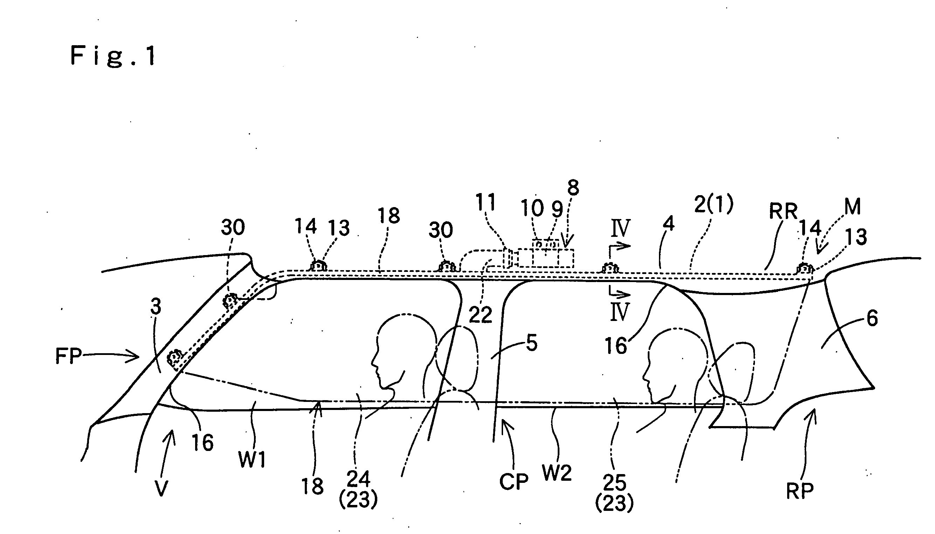

Referring to Fig. 1, it is seen that an airbag 18 being a first embodiment of the present invention is employed in a head-protecting airbag device M mountable on a vehicle V. The head-protecting airbag 18 is folded and housed in a front pillar FP and a roof side rail RR in upper edges of doors and windows W1, W2 and a rear pillar RP. The vehicle V includes a center pillar CP between the front pillar FP and the rear pillar RP, which is arranged substantially vertically.

The head-protecting airbag device M includes an inflator 8, mounting brackets 9 and 13, mounting bolts 10 and 14, and the airbag 18, and is housed while being covered by an airbag cover 16 at vehicle's interior side. The airbag cover 16 is constituted by lower edges of a front pillar garnish 3 covering vehicle's interior side of the front pillar FP and a roof head lining 4 covering vehicle's interior side of the roof side rail RR.

The front pillar garnish 3 and the roof head lining 4 are made from synthetic resin, and are attached to vehicle's interior side of an inner panel 2 as part of vehicle body 1 in the front pillar FP and the roof side rail RR by not-shown mounting means. The lower edges of the front pillar garnish 3 and the roof head lining 4 are adapted to open inward at their lower ends to allow the deploying airbag 18 to protrude therefrom.

The inflator 8 has a substantially cylindrical shape, and is provided toward its leading (front) end with not-shown gas discharge ports for discharging inflation gas. The leading end part of the inflator 8 including the vicinity of the gas discharge ports is inserted into a later-described gas inlet port 22 of the airbag 18. Thus and by means of a clamp 11 mounted around a rear end of the inlet port 22, the inflator 8 is connected to the airbag 18. The inflator 8 is attached to the inner panel 2 of the vehicle body 1 by a mounting bracket 9 holding the inflator 8 and mounting bolts 10 for securing the mounting bracket 9 to the inner panel 2.

An output ratio X (KPa/L) of the inflator 8 used in the foregoing embodiment to capacity of the airbag 18 (inflator output/airbag capacity) is desirably in a range of 8≤ X≤ 18 (more desirably, 10≤ X≤ 15). If the output ratio X is less than 8KPa/L, it is difficult for the airbag to retain enough internal pressure when completely inflated. To the contrary, if the output ratio X exceeds 18KPa/L, the internal pressure of the completely inflated airbag is too high. Both cases have problems in proper protection of occupants' heads. The output ratio X of the inflator 8 used in the foregoing embodiment is predetermined to be 10.4 KPa/L. Output of the inflator 8 is 260KPa (28.3L tank), and capacity of later-described gas admissive portion 19 of the airbag 18 is 25L.

Here, the inflator 8 is mounted on the vehicle V as part of an airbag module that is composed of the inflator 8 and the airbag 18 assembled together.

The airbag 18 is housed in a folded state from the front pillar FP extending obliquely upward to a position above the rear pillar RP in the roof side rail RR, passing over the center pillar CP. As indicated by double-dotted lines in Fig. 1, the airbag 18 upon deployment is adapted to cover vehicle's interior side of each of the windows W1, W2, the center pillar CP and the rear pillar RP.

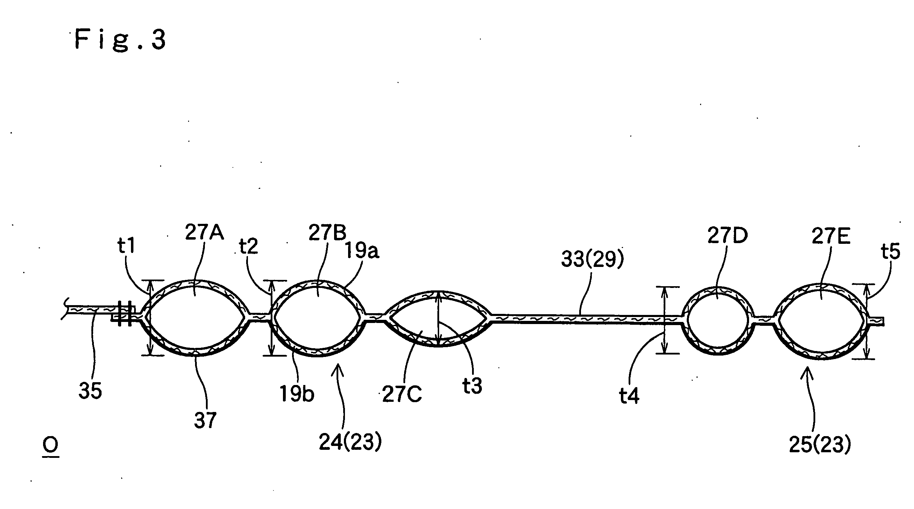

The airbag 18 is formed by hollow-weaving method of polyester, polyamide yarns or the like. The airbag 18 includes a gas admissive portion 19 which admits inflation gas G inside to separate its vehicle's inner wall 19a and vehicle's outer wall 19b, and a non-admissive portion 29 which admits no inflation gas G. As shown in Fig. 3, the airbag 18 has a coating layer 37 all over the outer surface of the outer wall 19b. That is, in the airbag 18, the outer wall 19b is made of coated fabric with the coating layer 37, while the inner wall 19a is made of uncoated fabric without a coating layer.

The gas admissive portion 19 includes a gas feed passage 21, a gas inlet port 22, and a protection portion 23. In a head-protecting airbag, a gas admissive portion usually has a capacity of 10 to 40L. The gas admissive portion 19 of the airbag 18 has a capacity of 25L.

The gas feed passage 21 is arranged in front-rear direction of vehicle V along an upper edge 18a of the airbag 18. In the illustrated embodiment, the gas feed passage 21 joins an upper end of a later-described vertical chamber 27B of a front protection portion 24 and an upper end of a later-described vertical chamber 27E of a rear protection portion 25. The gas feed passage 21 introduces inflation gas G discharged from the inflator 8 into the protection portion 23 located below the gas feed passage 21. The gas inlet port 22 to be joined with the inflator 8 is communicated with the gas feed passage 21, and projects upward from a longitudinally middle position of the gas feed passage 21. In the illustrated embodiment, the inlet port 22 is located above a vertical chamber 27C of the front protection portion 24, and is opened rearward.

The protection portion 23 is adapted to cover interior sides of windows W1 and W2 for protecting occupants' heads upon deployment of the airbag 18. The protection portion 23 includes a front protection portion 24 for covering an interior side of window W1 at side of front seat, and a rear protection portion 25 for covering an interior side of window W2 at side of rear seat.

Each of the front and rear protection portions 24 and 25 are partitioned by later-described partitioning portions 32 into a plurality of vertical chambers 27 each of which extends vertically. The vertical chambers 27 line up in front-rear direction in each area of the front and rear protection portions 24 and 25. In the illustrated embodiment, the front protection portion 24 includes three vertical chambers 27A, 27B and 27C, and the rear protection portion 25 includes two vertical chambers 27D and 27E. The vertical chambers 27B and 27E are communicated with the gas feed passage 21 at upper ends. Remaining vertical chambers 27A, 27C and 27D are closed at upper ends. The vertical chambers 27A and 27C are communicated with the vertical chamber 27B at lower end, and the vertical chamber 27D is communicated with the vertical chamber 27E at lower end. In other words, the vertical chambers 27A, 27C and 27D admit inflation gas G via the vertical chambers 27B and 27E.

In the foregoing embodiment, thickness t of the individual vertical chambers 27 at complete inflation is predetermined in a range of 100mm ≤ t ≤ 280mm (desirably in a range of 120mm ≤ t ≤ 250mm, and further desirably, in a range of 140mm ≤ t ≤ 200mm). If the thickness at complete inflation is less than 100mm, the airbag 18 becomes too thin to protect an occupant's head when engaging the head. To the contrary, if it exceeds 280mm, the airbag 18 becomes too thick upon deployment to go in between a gap between the occupant's head and window when the gap is narrow, which hinders smooth deployment of the airbag 18. In the illustrated embodiment, thicknesses t1, t2 and t5 of the vertical chambers 27A, 27B and 27E at complete inflation are 150mm, as shown in Fig. 3. Thickness t3 of the vertical chamber 27C at complete inflation is 100mm, and thickness t4 of the vertical chamber 27D is 130mm.

The thickness t3 of the vertical chamber 27C at complete inflation is predetermined smaller than the thicknesses t1, t2, t4 and t5 of other vertical chambers 27A, 27B, 27D and 27E. The vertical chamber 27C is adapted to cover interior side of the center pillar CP upon deployment of the airbag 18, and needs to deploy in a narrower gap between the center pillar garnish 5 and a seat located inward of the garnish 5. Accordingly, it is desired that the vertical chamber 27C is deployed in a thin state not having admitted much gas. Moreover, since the center pillar garnish 5 is projected inward than adjacent windows W1 and W2, the vertical chamber 27C for covering interior side of the center pillar garnish 5 is preferably thinner than other vertical chambers 27 upon airbag deployment. For these reasons, the thickness t3 of the vertical chamber 27C is predetermined smaller than those of other vertical chambers 27A, 27B, 27D and 27E by being partitioned in substantially middle position in its front-to-rear dimension in the upper end with a later-described extension 32a of a partitioning portion 32A.

The non-admissive portion 29 has a configuration in which the vehicle's inner wall 19a and the outer wall 19b are joined together. The non-admissive portion 29 includes mounting portions 30, a peripheral portion 31, partitioning portions 32, and a panel portion 33. The peripheral portion 31 is located to encircle the gas admissive portion 19 in outer periphery of the airbag 18. A joint cloth 35 is joined at front end of the peripheral portion 31.

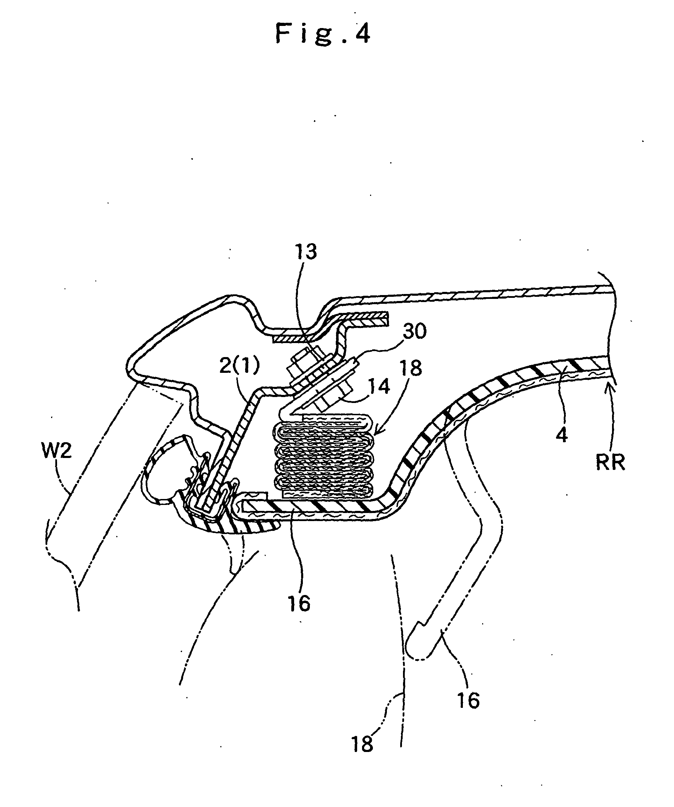

The mounting portions 30 project upward from upper edges of the peripheral portion 31 and the joint cloth 35 in the upper edge 18a of the airbag 18. The mounting portions 30 are provided in plurality (6, in the illustrated embodiment). As shown in Fig. 4, a mounting bracket 13 for mounting the airbag 18 to the inner panel 2 is attached to each of the mounting portions 30. Each of the mounting portions 30 is secured to the inner panel 2 together with the mounting bracket 13 by a bolt 14.

In the airbag 18, a mounting portion 30A located in the vicinity of front end of the joint cloth 35 is attached to vehicle body 1 in a lower part of the front pillar FP. Upon deployment of the airbag 18, accordingly, a tension in front-rear direction is exerted between the mounting portion 30A and a mounting portion 30B located in the vicinity of rear end of the airbag 18. In the airbag 18 having a plurality of vertical chambers 27 lined up in front-rear direction, especially, each of the vertical chambers 27 inflates in shrinking manner in front-rear direction, and therefore, a great tension is exerted in front-rear direction upon deployment of the airbag 18. Therefore, even if an occupant's head is in a position of the joint cloth 35 upon airbag deployment, the head is prevented from sliding out of the joint cloth 35.

The panel portion 33 has a rectangular sheet shape, and is located between the front and rear protection portions 24 and 25 below the gas feed passage 21. The panel portion 33 serves to define an entire shape of the airbag 18, and to minimize the time to complete inflation of the airbag 18 by reducing a volume of the gas admissive portion 19.

Each of the partitioning portions 32 extends from upper edges of the peripheral portion 31 or the panel portion 33 into an area of the front or rear protection portion 24/25. The partitioning portions 32 serve to regulate thickness of the airbag 18 at complete inflation by partitioning the front and rear protection portions 24 and 25 into the vertical chambers 27. A partitioning portion 32A located in the vertical chamber 27C has an extension 32a extending downward in middle position of front-to-rear dimension in the upper end of the vertical chamber 27C. The extension 32a partitions the vertical chamber 27C in middle position of front-to-rear dimension in the upper end part for regulating the thickness of the vertical chamber 27C which is located inward of the center pillar CP at complete inflation.

The coating layer 37 provided on outer surface of the vehicle's outer wall 19b is formed by coating agent such as silicone for preventing gas leakage. As shown in Fig. 3, the coating layer 37 is formed on outer side of the outer wall 19b so as to cover an exterior side O of the airbag 18 substantially all over.

Air permeability H of the uncoated vehicle' s inner wall 19a is predetermined in a range of 5.0cm³/cm²·s ≤ H ≤ 25.0cm³/cm²· s (desirably, in a range of 8.0cm³/cm²·s ≤ H ≤ 20.0cm3/cm². s). If the air permeability H is less than 5.0cm³/cm²·s, a fabric forming the inner wall 19a becomes so airtight that internal pressure of the completely inflated airbag 18 is hardly suppressed from rising at engaging an occupant's head, which annuls a meaning of employing uncoated fabric. On the other hand, if the air permeability exceeds 25.0cm³/cm²·s, gas leaks from the completely inflated airbag 18 so much that the airbag 18 cannot restrain an occupant's head with sufficient cushioning property when the head moving outward of the vehicle has high kinetic energy. Here, air permeability H in this specification is measured according to JIS L 1096 8.27.1 A method (Frazier method).

In the airbag 18 in the foregoing embodiment, air permeability H of the vehicle's inner wall 19a is predetermined at 16.67 cm³/cm².s (refer to Table 1). The inner wall 19a and outer wall 19b are woven by 6,6 Nylon yarn, and silicone is used as a coating agent forming the coating layer 37.

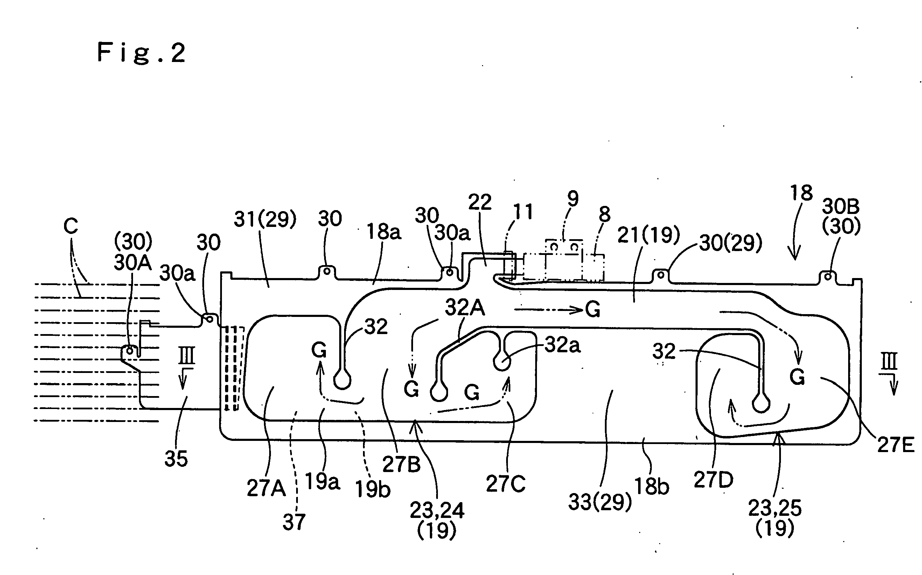

How the airbag 18 is mounted on vehicle V is now described. The airbag 18 is manufactured by hollow-weaving method except the joint cloth 35, and coating agent is applied all over the exterior side O of the outer wall 19b to form the coating layer 37. Then the joint cloth 35 is joined thereto. Subsequently, the airbag 18 is folded-up. More specifically, the airbag 18 is bellows-folded, from flat expanded state, on subsequent crest and valley folds C extending in front-rear direction, as indicated by double-dotted lines in Fig. 2, so that a lower edge 18b of the airbag 18 is brought closer to the upper edge 18a.

After the folding work, a not-shown breakable wrapping member is wound around the airbag 18 for keeping the folded-up configuration, and the mounting bracket 13 is attached to each of the mounting portions 30. In the meantime, the inflator 8 is joined with the gas inlet port 22 utilizing the clamp 11, and the mounting bracket 9 is mounted therearound. Thus the inflator 8 is assembled with the airbag 18 to form an airbag module.

By locating the individual mounting brackets 9 and 13 at predetermined positions of the inner panel 2, and fastening them with the bolts 9 and 14, thereafter, the airbag module is mounted on the vehicle body 1. Then, a not-shown lead wire extending from a predetermined control device for actuating the inflator is connected to the inflator 8. If the front pillar garnish 3, the roof head lining 4, and further the center pillar garnish 5 and the rear pillar garnish 6 are attached to the vehicle body 1, the airbag 18 is mounted on the vehicle V together with the airbag device M.

When the inflator 8 is actuated after the airbag device M is mounted on the vehicle V, inflation gas G is discharged from the inflator 8 and flows through the gas feed passage 21 from the gas inlet port 22, as indicated by double-dotted lines in Fig. 2. Then gas G flows into the protection portion 23 from the gas feed passage 21, and the protection portion 23 starts to inflate while unfolding. The airbag 18 then breaks the wrapping member, protrudes downward by pushing and opening the airbag cover 16 in the lower edges of the front pillar garnish 3 and the roof head lining 4, and inflates to cover interior sides of the windows W1 and W2, the center pillar CP, and the rear pillar RP, as indicated by double-dotted lines in Fig. 1.

In the airbag 18, the inner wall 19a as part of the protection portion 23 is made of uncoated fabric having no coating layer. Accordingly, if an occupant's head engages the protection portion 23 (the front/rear protection portion 24/25) of the completely inflated airbag 18, inflation gas G leaks from the inner wall 19a, which helps suppress a rise of internal pressure of the protection portion 23. In comparison with a conventional head-protecting airbag coated by coating agent such as silicone substantially all over outer surface, consequently, the airbag 18 in the foregoing embodiment contributes to suppress the rise of internal pressure at engaging the occupant's head. Moreover, in the airbag 18, since inflation gas leaks uniformly from a substantially entire area of the inner wall 19a, it is prevented that the internal pressure of the completely inflated airbag 18 rises partially, so that energy generated upon engagement of the occupant's head is uniformly absorbed.

Therefore, the head-protecting airbag 18 in the foregoing embodiment suppresses a rise of internal pressure, and has improved energy absorbing property to assure protection of an occupant's head.

In the airbag 18, the outer wall 19b as part of the protection portion 23 is made of coated fabric having a coating layer 37 of silicone or the like for preventing gas leakage on outer surface. Accordingly, even if a window pane located outward of the outer wall 19b is broken upon completion of inflation of the airbag 18, the outer wall 19b protected by the coating layer 37 is hard to damage. In addition, since the inner wall 19a is made of uncoated fabric, coefficient of friction of a surface of the inner wall 19a is lower in comparison with a case a coating layer is applied on surface of the inner wall, so that the airbag 18 smoothly deploys in a gap between the occupant' s head and window, even if the gap is narrow. The airbag 18 is desirably employed in a compact car which is limited in space.

Furthermore, the inner wall 19a of the airbag 18 is made of uncoated fabric whose air permeability H is predetermined in a range of 5.0cm³/cm²·s ≤ H ≤ 25.0cm³/cm²·s, so that a thickness t of the protection portion 23 upon complete inflation of the airbag 18 is in a range of 100mm ≤ t ≤ 280mm. Therefore, the occupant's head is properly protected by the protection portion 23 of the completely inflated airbag 18.

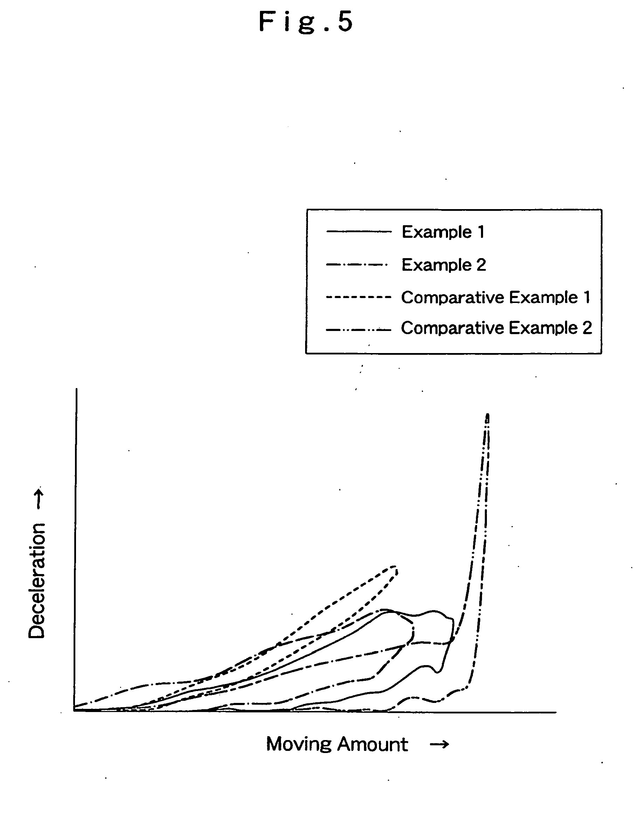

Fig. 5 shows a graph showing results of impacter test testing some airbags that meet requirements of the first embodiment. Airbags of Examples 1 and 2 are airbags that meet the requirements of the first embodiment. An airbag of Example 1 is the airbag 18. An airbag of Example 2 has the same construction as that of Example 1 except in that its thickness t is 180mm.

The impacter test was also conducted for airbags of Comparative Examples 1 and 2. An airbag of Comparative Example 1 is made from 6,6 Nylon yarn, and has the same shape as that of Example 1. This airbag is coated substantially all over outer surface by silicone or the like such that both inner wall and outer wall have coating layers on outer sides, as shown in Table 1. An airbag of Comparative Example 2 has the same shape as that of Example 1, but has no coating layer.

As shown in Table 1, the airbag of Example 1 and the airbag of Comparative Example 1 have substantially the same values in yarn density, tensile strength and tear strength. In other words, the airbag of Example 1 and the airbag of Comparative Example 1 differ from each other in existence of coating layers, i.e., the airbag of Example 1 has a coating layer only on outer surface of the vehicle's outer wall, while the airbag of Comparative Example 1 has coating layers both on outer wall and inner wall. On the other hand, the airbag of Comparative Example 2 differs from the airbag of Example 1 in not having any coating layers on the inner wall or on the outer wall. Here, air permeability H of the outer walls of Examples 1 and 2, and of the inner and outer walls of Comparative Example 1 are almost 0 since these walls have coating layers thereon. Actually, air permeability H of these walls were unmeasurable.

The impacter test was conducted by moving a hammer head having 6.8kg weight toward protection portions of completely inflated airbags at 7.6m/s velocity, substantially horizontally to be perpendicular to the protection portions, and measured deceleration and moving amount of the hammer head upon impact on the protection portions. In the graph of Fig. 5, each area of portions encircled by traces drawn by changes of deceleration and moving amount of hammer heads represents absorbing amount of energy of the hammer head by the protection portion of the airbag.

In the tests, the airbag of Comparative Example 1 is highly airtight since it is provided on both the inner and outer walls with coating layers, so that inflation gas does not easily leak from the inner wall or outer wall. Accordingly, when the hammer head impacts on the protection portion, the protection portion decelerates the hammer head suddenly in restraining it. When the movement of the hammer head toward the protection portion then stops completely, the protection portion pushes the hammer head back to a position before impact suddenly by a reaction force produced by a rise of internal pressure of the protection portion caused by engagement of the hammer head.

Contrarily in the airbags of Examples 1 and 2, when the hammer head impacts on the protection portions, the protection portions restrain the hammer head while leaking inflation gas from the inner wall. Although moving amounts of the hammer head toward the protection portions are greater than in Comparative Example 1, accordingly, the protection portions decelerate the hammer head gradually in restraining it. Since gas leakage from the inner wall helps suppress the rise of internal pressure of the protection portions, when the movement of the hammer head toward the protection portions stops completely, the hammer head is pushed back to a position before impact gradually. At this time, deceleration (acceleration in being pushed back) of the hammer head is even lower than the deceleration when moving toward the protection portions. As shown in Fig. 5, consequently, traces of test results of the airbags of the first embodiment have greater areas than that of a test result of the airbag of Comparative Example 1. That is, the airbags in Examples 1 and 2 are superior in energy absorbing property to the airbag of Comparative Example 1.

On the other hand, the airbag of Comparative Example 2 leaks inflation gas from both outer wall and inner wall of the protection portion when the hammer head impacts on the protection portion. Accordingly, the hammer head bottomed out because of leakage of great deal of inflation gas, and was not restrained by the protection portion.

The test results show that the airbag 18 is capable of suppressing a rise of internal pressure of the protection portion 23 when an occupant's head engages the protection portion 23, and has improved energy absorbing property for assuring protection of an occupant' s head, as shown in Fig. 5, on condition that the inner wall 19a is made of uncoated fabric while the outer wall 19b is made of coated fabric having a coating layer 37 on outer surface.

Table 1 also discloses a result of impacter test conducted on Comparative Example 3 employing a hollow-woven airbag in which air permeability H of an uncoated inner wall is 33.33cm³/cm²·s, and thickness t at completion of inflation is 180mm. In this airbag of Comparative Example 3, when the hammer head impacts on the protection portion, a great deal of inflation gas leaks from the inner wall because of too high permeability H of the inner wall, so that the hammer head was not restrained by the protection portion. If a load (weight or speed) of the hammer head is lower than in the impacter test, the airbag of Comparative Example 3 would be able to restrain the hammer head properly, too. However, if the uncoated inner wall 19a is made of fabric whose air permeability H is predetermined in a range of 5.0cm³/cm²·s ≤ H ≤ 25.0cm³/cm²·s, the occupant's head is properly protected even if the head having an increased kinetic energy impacts on the protection portion 23, which is more preferable.

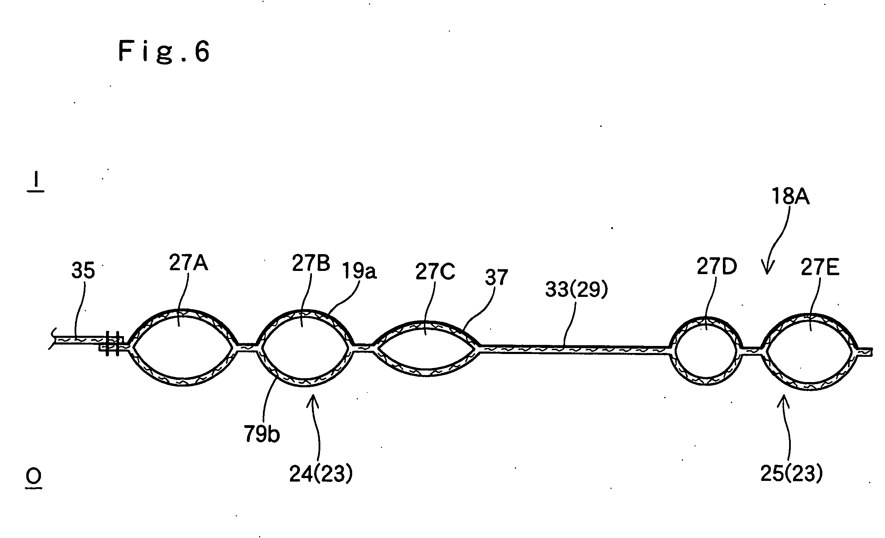

Although the airbag 18 has the coating layer 37 on the outer wall 19b, it will also be appreciated, as in an airbag 18A shown in Fig. 6, that an inner wall 19a located at interior side I is made of coated fabric having a coating layer 37 on outer surface, while an outer wall 19b located at exterior side O is made of uncoated fabric. If the inner wall 19a is made of coated fabric like this, coefficient of friction of a surface of the inner wall 19a is increased in comparison with a case where the inner wall 19a is made of uncoated fabric. This enhances restraint performance of occupant's heads by making the head unslippery against the inner wall.

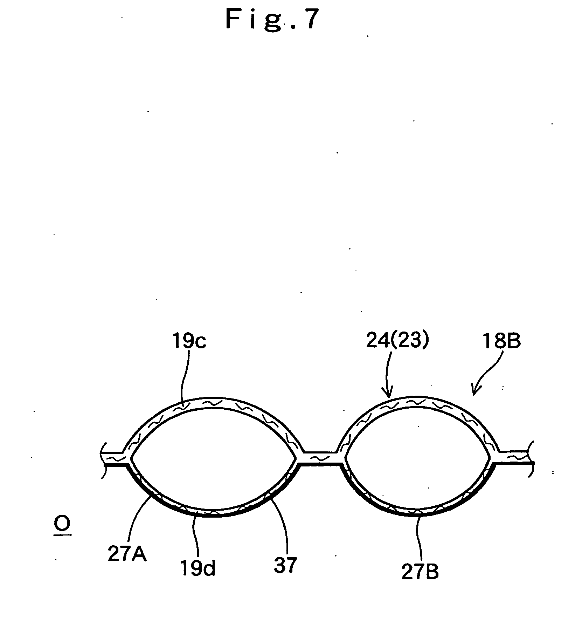

An airbag 18B shown in Fig. 7 may be adopted, too. In the airbag 18B, yarn density of an outer wall 19d having a coating layer 37 is lower than that of an inner wall 19c having no coating layer, e.g., the yarn density MD 67.5 yarn /24.5mm and CD 60.5 yarn/24.5mm of the inner wall 19c, against the yarn density MD 45.0 yarn /24.5mm and CD 45.0 yarn/24.5mm of the outer wall 19d. The coating weight of the coating agent forming the coating layer is 57.2g/m² in the airbag 18B, too, as in the airbag 18 in the first embodiment. The airbag 18B with this arrangement is lighter in weight than the airbag 18 which has the same yarn density in both the inner wall 19a and outer wall 19b, for a difference of the yarn density of the outer wall 19d. Moreover, since the outer wall 19d is thinner than the inner wall 19c, the airbag 18B is folded into a compacter shape compared to the airbag 18. The yarn density of fabric used for a wall having a coating layer is desirably 45.0 yarn/24.5mm or more each for MD/CD, because thinner fabric will require more coating agent.

Although the head-protecting airbags 18 and 18A in the foregoing embodiments are described as manufactured by hollow-weaving method, the airbag according to the present invention should not be limited thereby. The present invention may be applied to an airbag manufactured by stitching up fabric cloth members cut in predetermined shapes. In this case, coating layers may be arranged in inner surfaces of the airbag.

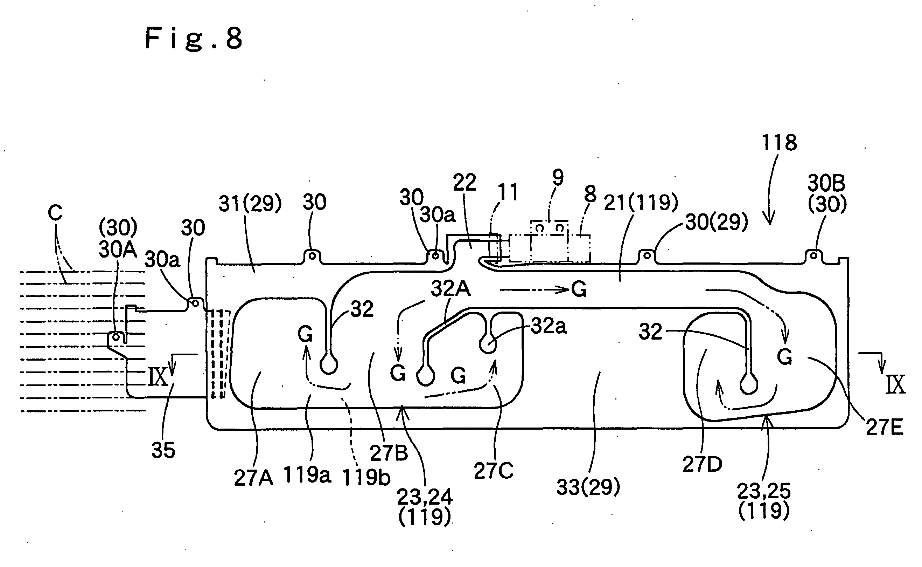

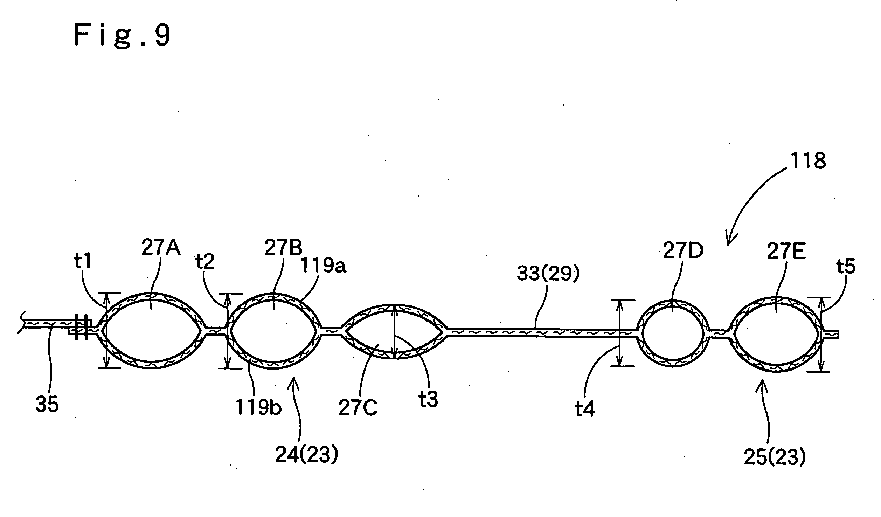

The second embodiment of the present invention is now described. An airbag 118 in the second embodiment is formed by hollow-weaving method of polyester, polyamide yarns or the like as the airbag 18. As shown in Figs. 8 and 9, the airbag 118 has a similar construction to the airbag 18 in the first embodiment except in that a vehicle' s inner wall 119a and outer wall 119b forming the gas admissive portion 119 are both made of uncoated fabric having no coating layers of silicone or the like on outer surfaces. Therefore, descriptions of the same members will be omitted by giving the same reference numerals to those members.

The vehicle's inner wall 119a and outer wall 119b of the gas admissive portion 119, or a protection portion 23, of the airbag 118 are made of uncoated fabric. Air permeability H of the inner wall 119a and outer wall 119b is predetermined in a range of 5.0cm³/cm²·s ≤ H ≤ 25.0cm³/cm²·s (desirably, in a range of 8.0cm³/cm²·s ≤ H ≤ 20.0cm³/cm²·s). If the air permeability H is less than 5.0cm³/cm²·s, a fabric forming the inner wall 119a and outer wall 119b becomes so airtight that internal pressure of the completely inflated airbag 118 is hardly suppressed from rising at engaging an occupant's head. Contrarily, if the air permeability H exceeds 25.0cm3/cm2·s, gas leaks from the completely inflated airbag 118 so much that the airbag 118 cannot restrain an occupant's headwith sufficient cushioning property.

The airbag 118 is woven by 6,6 Nylon yarn, and air permeability H of the inner wall 119a and outer wall 119b is predetermined at 16.67 cm³/cm²·s (refer to Table 2).

In the second embodiment, the inner wall 119a and outer wall 119b of the protection portion 23 for protecting occupants' heads are made of uncoated fabric whose air permeability H is 16.67 cm³/cm²·s. Accordingly, when an occupant's head impacts on the protection portion 23 (front/rear protection portion 24/25) of the airbag 118, inflation gas G leaks uniformly from an entire area of the inner wall 119a and outer wall 119b forming the protection portion 23, which contributes to suppress a rise of internal pressure of the protection portion 23. Of course, the protection portion 23 retains cushioning property sufficient for protecting occupants' heads, even in a condition where certain amount of inflation gas G has leaked therefrom. Accordingly, the protection portion 23 of the completely inflated airbag 118 has high energy absorbing property.

Therefore, the airbag 118 in the second embodiment also suppresses a rise of internal pressure when an occupant's head impacts thereon, and has improved energy absorbing property to assure protection of occupants' heads.

In the airbag 118, too, moreover, thickness t of the protection portion 23 at complete inflation is predetermined in a range of 100mm ≤ t ≤ 280mm. Accordingly, an occupant's head is properly protected by the protection portion of the completely inflated airbag.

Although the head-protecting airbag 118 in the second embodiment is described as manufactured by hollow-weaving method, manufacturing method of the airbag should not be limited thereby. The present invention may be applied to an airbag manufactured by stitching up cloth members cut in predetermined shapes, on condition that the airbag meets a requirement of air permeability H, as in later-described Examples 5 and 6.

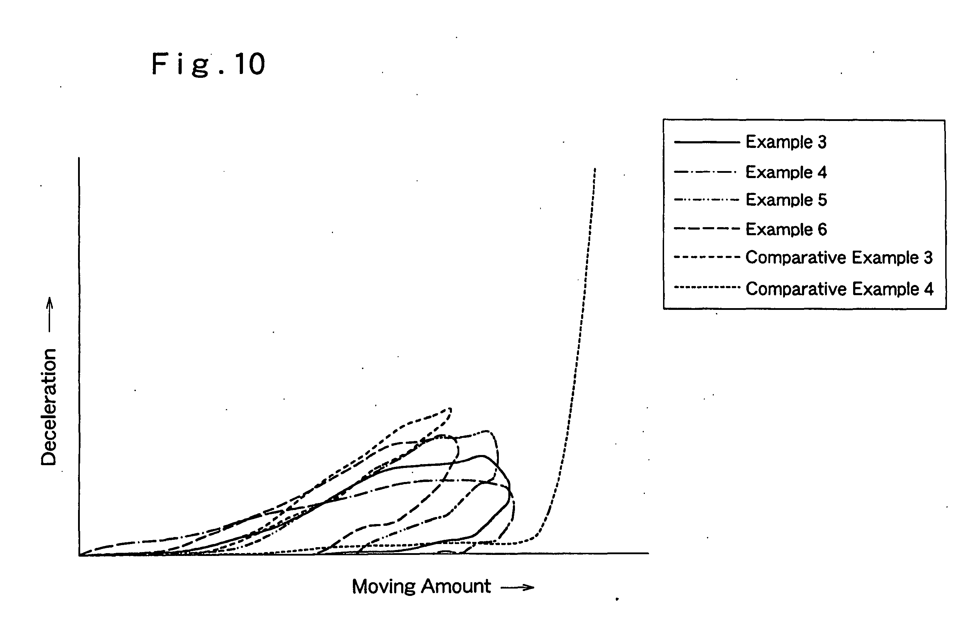

Fig. 10 shows a graph showing results of impacter test testing some airbags that meet requirements of the second embodiment. Airbags of Examples 3 to 6 are airbags that meet the requirements of the second embodiment. An airbag of Example 3 is the airbag 118. An airbag of Example 4 has the same construction as that of Example 3 except in that its thickness t is 180mm. An airbag of Example 5 is made by sewing work of fabric members cut in predetermined shapes whose air permeability H is 10.67cm³/cm²·s. Sealing is applied to the sewn portion for preventing gas leakage, and thickness t of the airbag of Example 5 at complete inflation is 150mm. An airbag of Example 6 has the same construction as that of Example 5 except in that its thickness t is 180mm.

The impacter test was also conducted for airbags of Comparative Examples 4 and 5 under the same conditions as conducted on Examples 3 to 6. An airbag of Comparative Example 4 is made from 6,6 Nylon yarn, and has the same shape as that of Example 3. This airbag is coated by silicone on outer surfaces of an inner wall and outer wall forming a protection portion, as shown in Table 2. An airbag of Comparative Example 5 is made of fabric manufactured by hollow-weaving method. Its air permeability H is 33. 33cm³/cm²·s, and its thickness t at complete inflation is 180mm.

As shown in Table 2, the airbag of Example 3 and the airbag of Comparative Example 4 have substantially the same values in yarn density, tensile strength and tear strength. In other words, the airbag of Example 3 and the airbag of Comparative Example 4 differ from each other in existence of a coating layer. Since the airbag of Comparative Example 4 has coating layers on outer surfaces of both the inner an outer walls, air permeability H of those walls are almost 0. Actually, air permeability H of Comparative Example 4 was unmeasurable. In a line of coating weight of coating agent in Table 2, "Face" represents an inner wall side, and "Back" represents an outer wall side.

The impacter test for the second embodiment was conducted by moving a hammer head having 6.8kg weight toward protection portions of completely inflated airbags at 6.5m/s velocity, from a direction perpendicular to the protection portions, and measured deceleration and moving amount of the hammer head upon impact on the protection portions. That is, the impacter test for the second embodiment was conducted at later speed of hammer head than in the test for the first embodiment. In the graph of Fig. 10, each area of portions encircled by traces drawn by changes of deceleration and moving amount of hammer head represents absorbing amount of energy of the hammer head by the protection portion of the airbag.

In the tests, the airbag of Comparative Example 4 is highly airtight since it is coated by coating agent on the outer surface, so that inflation gas does not easily leak from the protection portion. Accordingly, when the hammer head impacts on the protection portion, the protection portion decelerates the hammer head suddenly in restraining it. When the movement of the hammer head toward the protection portion then stops completely, the protection portion pushes the hammer head back to a position before impact suddenly by a reaction force produced by a rise of internal pressure of the protection portion caused by engagement of the hammer head.

Contrarily in the airbags of Examples 3 to 6, when the hammer head impacts on each of the protection portions, the protection portion restrains the hammer head while leaking inflation gas. Although moving amounts of the hammer head toward the protection portions are greater than in Comparative Example 4, accordingly, the protection portions decelerate the hammer head gradually. Since gas leakage helps suppress a rise of internal pressure of the protection portions, when the movement of the hammer head toward the protection portions stops completely, the hammer head is pushed back to a position before impact gradually. At this time, deceleration (acceleration in being pushed back) of the hammer head is even lower than the deceleration when moving toward the protection portions. As shown in Fig. 10, consequently, traces of test results of the airbags of Examples 3 to 6 have greater areas than that of a test result of the airbag of Comparative Example 4. That is, the airbags in Examples 3 to 6 are superior in energy absorbing property to the airbag of Comparative Example 4.

In an airbag of Comparative Example 5, too high air permeability H allowed great deal of inflation gas to leak from the protection portion, so that the hammer head bottomed out and was not restrained by the protection portion.

The test results show that the airbag 118 is capable of suppressing arise of internal pressure of the protection portion 23 when an occupant's head impacts on the protection portion 23, and has improved energy absorbing property for assuring protection of occupants' heads, as shown in Fig. 10, on condition that the inner wall 119a and outer wall 119b of the protection portion 23 are made of uncoated fabric whose air permeability H is in a range of 5.0cm³/cm²·s ≤ H ≤ 25.0cm³/cm²·s.

Here, Example 3 in the impacter test for the second embodiment employs the same airbag as that used in Comparative Example 2 in the impacter test for the first embodiment. That is, the test for the second embodiment was conducted under condition that speed of hammer head is slower than in the test for the first embodiment, and therefore, it is proved that an airbag in Example 3, or in Comparative Example 2, is capable of protecting a hammer head properly with sufficient energy absorbing property in a case where the speed of hammer head is slow, or where the load of hammer head is low. As a result, airbags that meet requirements of the first embodiment are more suitable for vehicles in which higher load is likely to be generated by occupants' heads upon impact than airbags that meet requirements of the second embodiment. For example, the airbags that meet requirements of the first embodiment are more suitable for such vehicles as have third-row seating, while the airbags that meet requirements of the second embodiment are more suitable for vehicles such as hatchback type compact cars.

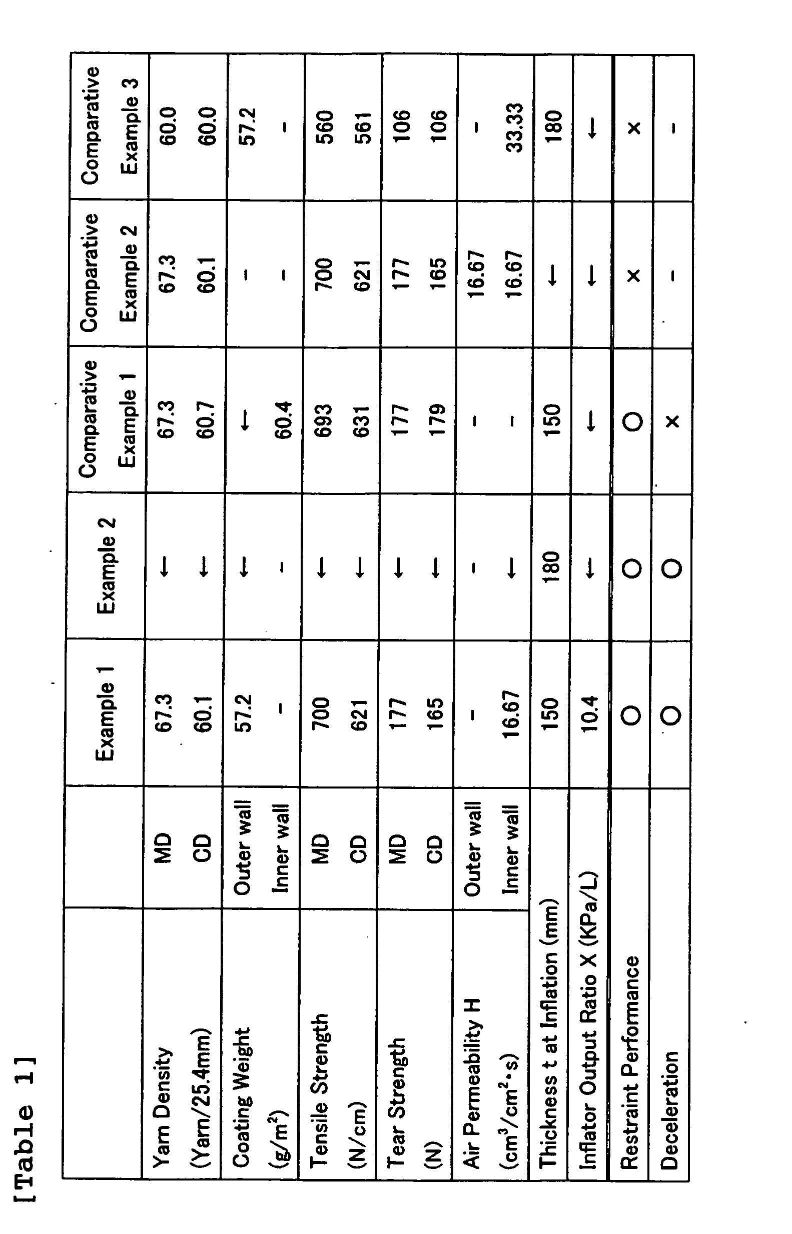

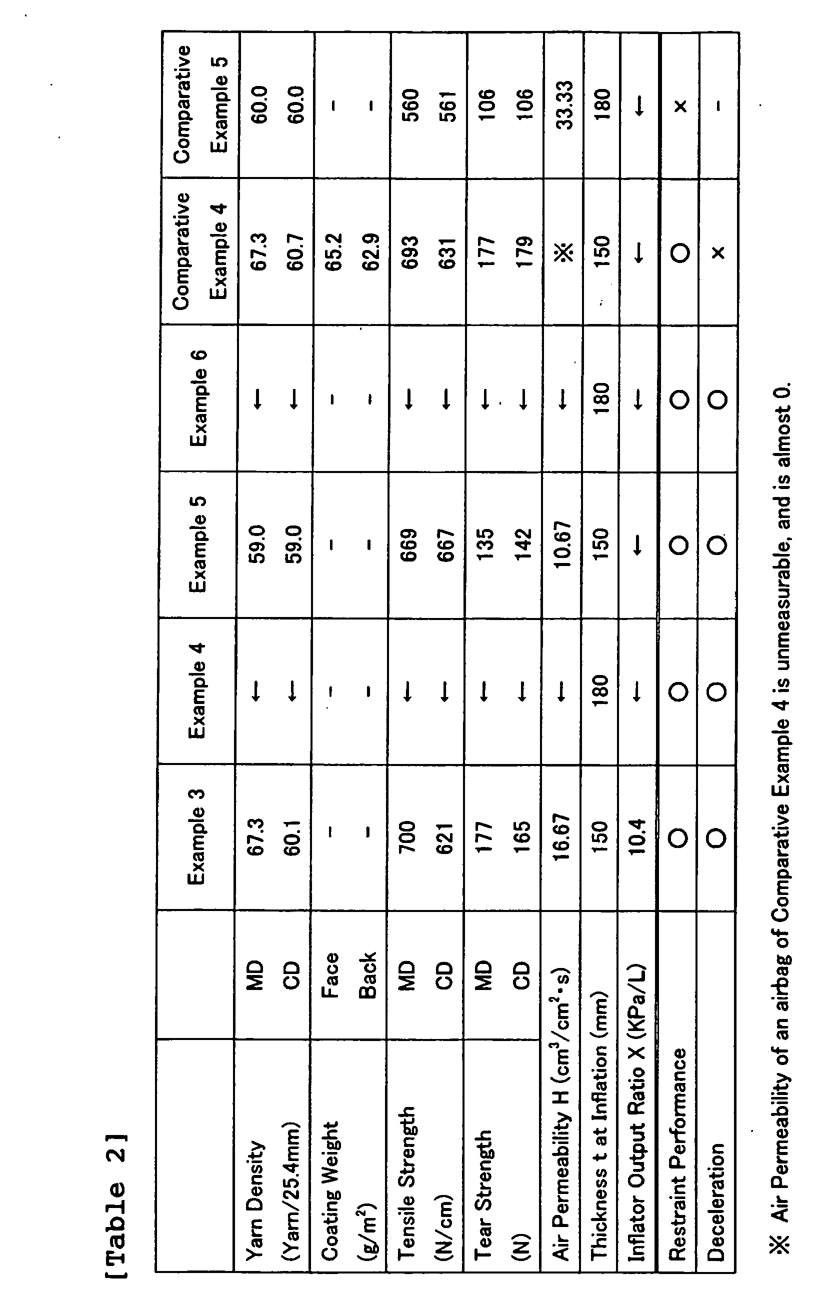

## Claims

1. A head-protecting airbag folded and housed in upper edge of windows inside a vehicle, and deployable upon inflow of inflation gas to cover interior side of windows,
the airbag comprises a protection portion inflatable for protecting occupants' heads upon airbag deployment;
the protection portion comprises a vehicle's inner wall and a vehicle's outer wall both of which are made of fabric, the walls separating from each other upon inflation of the protection portion; and
at least one of the walls is made of uncoated fabric which is not coated by coating agent
**characterized in that**
air permeability H of the uncoated fabric is in a range of 5.0cm³/cm²·s ≤ H ≤ 25.0cm³/cm²·s.

2. A head-protecting airbag as set forth in claim 1,
**characterized:**
**in that** thickness t of the protection portion at complete inflation of the airbag is predetermined in a range of 100mm ≤ t ≤ 280mm.

3. A head-protecting airbag as set forth in claim 2,
**characterized:**
**in that** either one of the inner wall or outer wall is made of coated fabric which has a coating layer for preventing gas leakage thereon.

4. A head-protecting airbag as set forth in claim 3,
**characterized:**
**in that** yarn density of the coated fabric is smaller than yarn density of the uncoated fabric.

## Patentansprüche

1. Kopfschützender Airbag, der gefaltet und in einem oberen Rand des Fensters im Inneren eines Fahrzeugs untergebracht ist, und infolge eines Zustroms von Aufblasgas entfaltbar ist, um die innere Seite von Fenstern zu bedecken, wobei
der Airbag einen Schutzabschnitt hat, der für den Schutz der Köpfe von Insassen bei Airbagauslösung aufblasbar ist;
der Schutzabschnitt eine Fahrzeuginnenwand und eine Fahrzeugaußenwand hat, von denen beide aus Gewebe hergestellt sind, wobei sich die Wände durch das Aufblasen des Schutzabschnitts voneinander trennen; und
zumindest eine der Wände aus einem unbeschichteten Gewebe hergestellt ist, das nicht mit einem Beschichtungsmittel beschichtet ist,
**dadurch gekennzeichnet, dass**
die Luftdurchlässigkeit H des unbeschichteten Gewebes in einem Bereich von 5,0 cm3/cm²·s ≤ H ≤ 25,0 cm³/cm²·s ist.

2. Kopfschützender Airbag gemäß Anspruch 1,
**dadurch gekennzeichnet, dass**
die Dicke t des Schutzabschnitts bei vollständiger Aufblasung des Airbags in einem Bereich von 100 mm ≤ t ≤ 280 mm vorbestimmt ist.

3. Kopfschützender Airbag gemäß Anspruch 2,
**dadurch gekennzeichnet, dass**
entweder die Innenwand oder die Außenwand aus einem beschichteten Gewebe hergestellt ist, an dem sich eine Beschichtungslage befindet, um das Ausströmen von Gas zu verhindern.

4. Kopfschützender Airbag gemäß Anspruch 3,
**dadurch gekennzeichnet, dass**
die Garndichte des beschichteten Gewebes geringer als die Garndichte des unbeschichteten Gewebes ist.

## Revendications

1. Coussin de sécurité gonflable de protection de la tête plié et logé dans un bord supérieur de fenêtres à l'intérieur d'un véhicule, et déployable lors d'un afflux de gaz de gonflage pour couvrir le côté intérieur de fenêtres,
le coussin de sécurité gonflable comprend une portion de protection gonflable pour protéger les têtes des occupants lors d'un déploiement du coussin de sécurité gonflable ;
la portion de protection comprend une paroi interne du véhicule et une paroi externe du véhicule dont toutes deux sont constituées d'une étoffe, les parois se séparant l'une de l'autre lors du gonflage de la portion de protection ; et
au moins l'une des parois est constituée d'une étoffe non revêtue qui est non revêtue par un agent de revêtement
**caractérisé en ce que**
la perméabilité à l'air H de l'étoffe non revêtue est dans une gamme de 5,0 cm³/cm²•s ≤ H ≤ 25,0 cm³/cm²•s.

2. Coussin de sécurité gonflable de protection de la tête selon la revendication 1, **caractérisé :**
**en ce que** l'épaisseur t de la portion de protection au gonflement complet du coussin de sécurité gonflable est prédéterminée dans une gamme de 100 mm ≤ t ≤ 280 mm.

3. Coussin de sécurité gonflable de protection de la tête selon la revendication 2, **caractérisé :**
**en ce que** l'une ou l'autre de la paroi interne ou de la paroi externe est constituée d'une étoffe revêtue qui a une couche de revêtement pour empêcher une fuite de gaz sur celle-ci.

4. Coussin de sécurité gonflable de protection de la tête selon la revendication 3, **caractérisé :**
**en ce que** la densité de fil de l'étoffe revêtue est plus petite que la densité de fil de l'étoffe non revêtue.
